# EUROPÄISCHE PATENTSCHRIFT

(11) **EP 2 039 183 B1**
(45) Veröffentlichungstag und Bekanntmachung des Hinweises auf die Patenterteilung: **28.10.2015**
(21) Anmeldenummer: 07764855.8
(22) Anmeldetag: 26.06.2007
(51) Int. Cl.: H04W 4/10, H04W 76/00, H04W 4/20, H04W 88/16

(54) **PUSH-TO-TALK PSTN BACK-TO-BACK USER AGENT ZUR ANBINDUNG EINES PTT SYSTEMS MIT DER PSTN/ISDN WELT**
PUSH-TO-TALK PSTN BACK-TO-BACK USER AGENT FOR CONNECTING A PTT SYSTEM TO THE PSTN/ISDN WORLD
AGENT D'UTILISATEUR BACK-TO-BACK DE MESSAGERIE INSTANTANÉE (PUSH-TO-TALK) PERMETTANT DE RELIER UN SYSTÈME PTT À L'UNIVERS PSTN/ISDN

(30) Priorität: 08.07.2006 DE 102006031701
(43) Veröffentlichungstag der Anmeldung: 25.03.2009
(73) Patentinhaber: Deutsche Telekom AG, 53113 Bonn (DE)
(72) Erfinder: ESSELING, Norbert, 53229 Bonn (DE)
(74) Vertreter: Riebling, Peter
(86) Internationale Anmeldenummer: PCT/EP2007/005629
(87) Internationale Veröffentlichungsnummer: WO 2008/006461

(56) Entgegenhaltungen:
- WO-A-2005/006650
- GB-A- 2 404 117

## Beschreibung

Die Erfindung betrifft ein Verfahren zur Kommunikation von ein- und ausgehenden Anrufen in einem analogen bzw. digitalen Telefonnetz, wobei die Kommunikation mittels einem User-Agent (UA) einen Push-To-Talk-Service (PTT-Dienst) ausgeführt wird und als Schnittstelle für eine wechselweise Übertragungsrichtung in einem Übertragungskanal mit automatischer Richtungsumschaltung für die aktiven Teilnehmer (Semi-Duplex-Verfahren) zwischen dem Push-To-Talk User Agent und dem analogen bzw. digitalen Telefonnetz ausgebildet ist, wobei das analoge bzw. digitale Netz als Schnittstelle zum User-Agent (UA) dient, welche die Push-To-Talk-Funktionen unterstützt.

### Stand der Technik:

Aus dem Stand der Technik ist bisher ein Push-To-Talk (PTT) als Dienst für mobile Paketnetze, wie zum Beispiel für das GSM- oder UMTS-Netz bekannt, bei welchem spezielle Endgeräte notwendig sind.

Ein derartiger Dienst ist in ähnlicher Weise als Sprachfunkdienst mit "Walkie-Talkie" - Endgeräten bekannt.

Die für einen derartigen Push-To-Talk-Dienst notwendigen speziellen Endgeräte verfügen in den meisten Fällen über eine Push-To-Talk-Taste, welche durch Drücken entsprechende Sprachnachrichten bzw. Sprachinformationen an die teilnehmenden Personen übermittelt.

Push-To-Talk-Dienste werden vorzugsweise dazu verwendet, Sprachinformationen schnell und direkt an Personen zu übermitteln.

Derartige Push-To-Talk-Dienste ermöglichen einen ständigen Kontakt zwischen mindestens zwei Kommunikationsteilnehmern über Hunderte von Kilometern über das mobile Päketnetz GSM oder UMTS.

Darüber hinaus ist bei derartigen Diensten eine direkte Kommunikation einer ganzen Personengruppe mit beliebiger Teilnehmerzahl durchführbar.

Die aus dem bisherigen Stand der Technik bekannten Push-To-Talk-Dienste verwenden in diesem Umfeld bisher digitale Pocket-Kommunikationsnetze bzw. das GSM oder das UMTS-Netz für eine Push-To-Talk Kommunikation.

Ein wesentlicher Vorteil der Erfindung ist, dass eine einfache Kombination bestehender paketbasierter Push-To-Talk-Systeme mit analogen/digitalen/ISDN Telefonanschlüssen durchführbar ist, bei denen Standard Telefone verwendet werden können.

Eine derartige Gruppenkommunikation von analogen (PSTN) bzw. digitalen (ISDN) Telefone wird bisher durch Telefonkonferenzen realisiert.
Somit sind bisher diese beiden Kommunikationsarten einmal als Push-to-Talk-Dienst im GSM oder UMTS-Netz und als Telefonkonferenz im analogen bzw. digitalen Telefonnetz separat nebeneinander durchführbar.

Mit der Druckschrift GB 2 404 117 A wird ein Verfahren für den Betrieb eines zellularen Kommunikationssystems offenbart, wobei ein Mobilfunkendgerät an einer Kommunikationsverbindung teilnimmt, welche ein IP-Verbindungsprotokoll verwendet, wobei ein erster Nutzer eine Sprachnachricht im Mobilfunkendgerät eingibt, welches diese zu einem zweiten Nutzer sendet, wobei die Sprachnachricht auf Sprachgrundlage eingegeben wird und über einen Sprachübertragungspfad übermittelt wird und den Pfad zwischen der Bereitstellung der Anruffunktion und der Datenzugangsfunktion einschließt, die Einheiten für Sprachnachrichten aufweisen. Dieser Druckschrift ist eine Semi-Duplex-Kommunikation für eine Datenübermittlung aus oder in ein analoges bzw. digitales Netz nicht zu entnehmen.

Mit der Druckschrift WO 2005/006650 A wird ein Verfahren zur Freigabe eines ersten Endgerätes (CST) offenbart, welches ein leitungsvermitteltes Übertragungsprotokoll verwendet, um an einer Telefonsitzung zur Verteilung von Nachrichten zwischen einer Gruppe von Endgeräten teilzunehmen, welche ein leitungsvermitteltes Daten-Übertragungsprotokoll anwenden, wobei eine Rufaufbaumeldung eine Antwort eines teilnehmenden Endgerätes in der Telefonsitzung zu einen Verwaltungsserver angibt, und der Server einen Auftrag zur Übermittlung einer gepufferten und konvertierten Nachricht erhält, welche von einem Ladeformat gemäß dem paketvermittelten Übertragungsprotokoll zu einem Ladeformat gemäß dem leitungsvermittelten Übertragungsprotokoll oder umgekehrt übertragen wird.
Dieser Druckschrift ist die Unterstützung einer interaktiven Sprachausgabe und/oder Spracherkennung einer analogen bzw. digitalen Kontrollschnittstelle nicht zu entnehmen.

Die Erfindung hat sich deshalb die Aufgabe gestellt, einen Push-to-Talk-Dienst derart weiterzubilden, dass dieser Dienst mit einfachen und kostengünstigen Endgeräten in Kombination eines GSM-/UMTS-Netzes in Verbindung mit einem analogen bzw. digitalen Telefonnetz durchführbar ist.

Die Lösung der Aufgabe ist durch die Merkmale der unabhängigen Patentansprüche gekennzeichnet.

Wesentliches Merkmal der Erfindung ist, dass das die Schnittstelle als Rechner einen Kommunikationsknoten- bzw. Gruppensystem verwendet und eine Kommunikation in einem Übertragungskanal mit automatischer Richtungsumschaltung in einem analogen oder digitalen Telefonnetz in Richtung eines verfügbaren Push-to-Talk-Servers ausführt, wobei das analoge oder digitale Telefonnetz als Audio- und Kontrollschnittstelle in Richtung des Bedienungsmittels ausgebildet ist.

Diese erfindungsgemäße Lösung weist den wesentlichen Vorteil auf, dass nunmehr ein Push-to-Talk-Dienst in einfachster Weise in einem analogen oder digitalen Telefonnetz durchführbar ist, wobei die hierzu verwendeten Bedienungsmittel mobile Telefone, wie Handys oder Standardtelefone im analogem Telefonnetz, mit oder ohne Unterstützung des Zweiton-Verfahrens (dual-tone-multi-frequency (DTMF)) sind.

Zur Durchführung eines derartigen Verfahrens mit einer erfindungsgemäßen Vorrichtung, welche nach diesem Verfahren einen Push-To-Talk-Dienst ausführt, ist ein Benutzer von analogen oder digitalen Telefonnetzen (PSTN/ISDN) mit dem Push-To-Talk-User Agent (PTT-UA) verbunden.

Dieser PTT-UA baut selbsttätig eine Verbindung zu einem verfügbaren Push-to-Talk-Server (PTT-Server) auf.

Darüber hinaus ist der PTT-UA mit einem Messaging-Dienst, wie zum Beispiel mit dem "short message service center" (SMSC) verbunden.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Dabei zeigt:

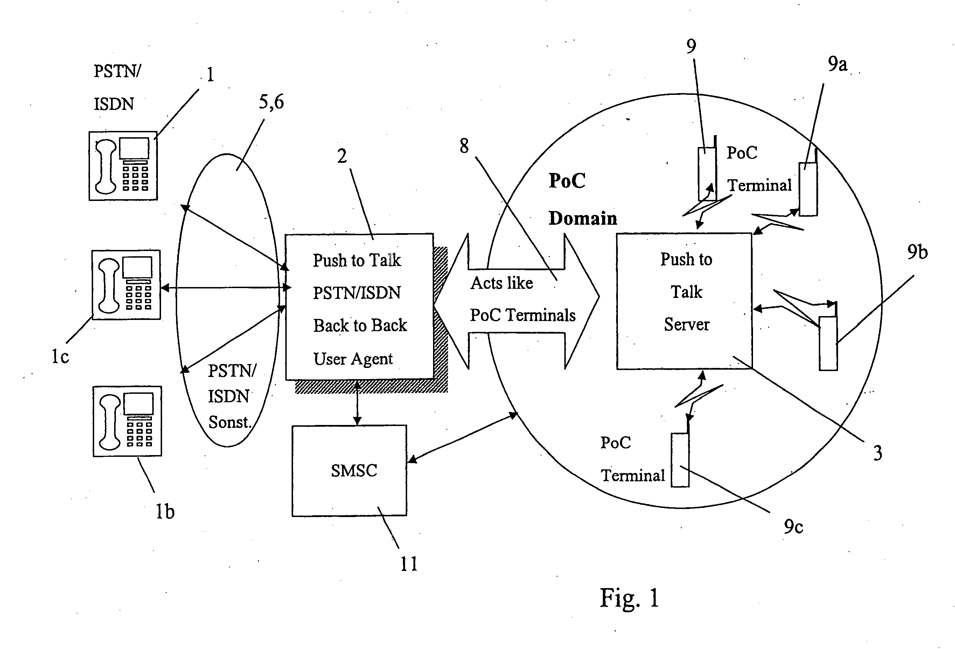

- Figur 1:: einen schematischen Aufbau eines erfindungsgemäßen Push-To-Talk-Verfahrens mit den zugehörigen Vorrichtungen

Das in Figur 1 dargestellte Verfahren zur Ausführung eines Push-To-Talk Verfahrens mit den entsprechenden Vorrichtungen, welche nach diesem Verfahren einen Push-To-Talk-Dienst ausführen, zeigt, dass ein User (Benutzer) von analogen oder digitalen Telefonnetzen (PSTN/ISDN) 6,5 mit einem Push-To-Talk-User Agent (PTT-UA) 2 mittels entsprechenden Push-To-Talk-fähigen Endgeräten 1, 1a, 1 b verbunden ist.

Dieser PTT-UA 2 baut selbsttätig eine Verbindung zu einem verfügbaren Push-to-Talk-Server (PTT-Server) 3 auf.
Darüber hinaus ist der PTT-UA 2 mit einem Messaging-Dienst, wie zum Beispiel mit dem "short message service center" (SMSC) 11 verbunden.

Zur Durchführung eines Push-to-Talk-Dienstes sind verschiedenartige Funktionen erforderlich, welche teilweise als Konfigurationsfunktionen eingesetzt werden oder als Bedienungsfunktionen für einen Bediener eines derartigen PTT-UA 2 frei wählbar sind.

### • Benutzer Zugangs Daten

Der PTT-User Agent 2 speichert alle anmelde - und benutzerrelevanten Daten, die zur Kommunikation mit dem PTT-Server 3 im Namen der PSTN/ISDN-Einrichtung (PIE) 7 notwendig sind. Jeder PTT-Benutzer hat sein eigenes, persönliches Konto.

### • Anmeldung zum Service

Die Anmeldung ist für die Authentifizierung der Benutzer, zwecks Erhalt der Zugangsermächtigung zu dem PTT-Service und zu seinen Kontodaten notwendig.
Die Anmeldung wird durch eine Calling Party Adresse 14 des anrufenden Benutzers mit einem Benutzernamen durchgeführt, wie bei einem Passwort Mechanismus via eines Zweitonverfahrens (DTMF) 11 oder Sprachgesteuerte Menüführung IVR (Interactive Voice Response) 12 oder mittels reiner Stimmerkennung.
Die Anmeldung wird an den PTT-Server 3 in einem notwendigen Format eines PTT-Endgerätes 1, 1 a, 1 b weitergeleitet.
Zusätzliche Authentifikations-Prozeduren der PTT-Lösung, wie zum Beispiel Übertragung der vertrauenswürdigen Nutzer-Information zum Authentifikations- Service werden durchgeführt.

### • Anmeldung zu den Gruppen

Die PTT Kommunikation kann in Gruppen oder als Eins-zu-Eins Verbindung organisiert sein.
Für die Gruppenkommunikation verbindet der PTT-User Agent 2 den Audio Pfad der PIE 7 mit der Gruppe von Benutzern, welche der PIE 7 zugeteilt sind.
Somit wird der Benutzer während der Anmeldung identifiziert.

### • Push-To-Talk Floor Control (PTT-FC) 4 / Kollisionskontrolle

Der PTT-UA 2 kann unterschiedliche Regeln für Teilnehmer der PTT-Konversation handhaben.
Insbesondere wird die Floor Control-Funktion, welche die Kollision von einem Gesprächs-Burst Richtung des PTT-Servers 3 kontrolliert und dadurch vermieden.
Eine derartige Funktion ist auch aus einer Uni-direktionalen Kommunikation bekannt.
Das Erkennen der Funktion der PIE 7 einen Gesprächs-Burst zu senden, erfolgt über DTMF 11 oder Spracherkennung / Sprachaktivierungserkennung / Geräuscherkennung /Geräuschpegelerkennung.

### • Speicherung und Benachrichtigung

Im Fall, dass die PIE 7 nicht mit dem PTT-UA 2 verbunden ist, aber eine laufende Verbindung für diesem Benutzer besteht, kann der PTT-UA 2 den Gesprächs-Burst speichern, die PIE anrufen und den Gesprächs-Burst abliefern.
Darüber hinaus kann der PTT-UA 2 den Burst 15 löschen, die PIE 7 rufen und sich zu der Gruppe verbinden.
Wird der Anruf von der PIE 7gelöscht, kann der Benutzer entscheiden, ob er benachrichtigt werden möchte. Er kann entscheiden, ob er in der Gruppe des PTT-Servers 3 bleibt oder nicht.
Möchte der Benutzer nicht in der Gruppe bleiben, meldet sich dieser von der Gruppe beziehungsweise vom Service des PTT Servers 3 ab.

### • Menü und Einstellungen

Der PTT-User Agent 2 unterstützt ein Menü zum Setzen aller Parameter, die am PTT-Server 3 vom PTT-Endgerät 1, 1 a, 1 b unterstützt werden.
Dies beinhaltet:
- Gruppen Definition und Bedienung (erstellen/editieren/löschen/annehmen)
- Setzen von Benutzer Präferenzen
- Handhabung von Benachrichtigungen
- Konfiguration des Services

Diese Funktion zum Setzen von Parameter sind jedoch nicht auf derartige Menüpunkte beschränkt.
Die Bedienung erfolgt über ein IVR-System (interactive voice response) 12 oder über direkte Kommandos, welche entweder via DTMF 11 oder Spracherkennungskommandos gesteuert wird.

### • Adressierung von Benutzern/Gruppen

Die Adressierung von Benutzern wird durch den PTT-UA 2 unterstützt und im wesentlichen vereinfacht.
Es ist möglich die Gruppen entweder mittels Spracherkennung, wie zum Beispiel das Sprechen von ganzen Wörtern oder das Sprechen von einzelnen Buchstaben nacheinander zu adressieren.
Darüber hinaus ist eine Adressierung über DTMF 11 durch Einsetzen von SMS-ähnlicher Eingabe, wie zum Beispiel dreimal die Ziffemtaste 9 für "y" oder mit einem Textvervollständigungsalgorithmus, wie zum Beispiel "T9" zu adressieren.

### • Eins-zu-Eins Kommunikation

Innerhalb einer PTT-Kommunikation kann eine Semi-Duplex (automatische Umschaltung der Übertragungsrichtung in einem Übertragungskanal) 18 eine "Eins zu Eins" Kommunikation über DTMF aufbauen.

Darüber hinaus kann unter Verwendung eines Escape-Codes 16, wie zum Beispiel die "0" oder durch direkte Adressierung des Partners durch Kurzwahl oder des Namen ebenfalls eine Kommunikation aufgebaut werden.

### • Eins-zu-Eins/Gruppen Kommunikation; Verbindungsaufbau (Anruf)

Die PIE 7 kann einen Push-To-Talk Gruppenanruf, wie zum Beispiel Anruf der gesamten Gruppe aufbauen und empfangen.
Die Adressierung von Benutzern für einen Gruppenanruf wird unterstützt und durch den PTT-UA 2 vereinfacht.
Hierbei ist es möglich die Gruppenidentitäten oder die der Benutzer entweder mittels Spracherkennung (ganze Wörter oder ein Buchstabe nach dem anderen/Kurzwahl/Namen) oder über DTMF 11 durch SMS-ähnlicher Eingabe wie zum Beispiel dreimal die Zifferntaste "9" für "den Buchstaben "y" oder mit einem Textvervollständigungsalgorithmus, wie zum Beispiel "T9" für ganze Wörter oder einzelner Buchstaben nach dem anderen/Kurzwahl/Namen zu adressieren.

### • Zusatzdienste

Zusatzdienste wie Rufumleitung, Konferenzschaltungen, Anklopfen, Weiterverbinden, Anruf halten können auf PSTN/ISDN 6, 5 Seite entweder anruferseitig oder terminierend verwendet werden.
Alle diese Dienste können auch in einem/r PTT Anruf/Verbindung verwendet werden.

### • Konferenzschaltungen

Zusätzlich zur PTT Funktionalität stellt der PTT-UA 2 eine Konferenzschaltung bereit, welcher der PIE 7, oder anderen Benutzern von PSTN/ISDN/PLMN-Festnetzen 6, 5, 17 und Benutzern einer PTT-Server Gruppen ermöglicht in einer Konferenz zu sein.
Die Konferenz kann als einzelner Benutzer zum PTT-Server 3 gesehen werden, wenn eine bidirektionale Kommunikation in der Konferenz verwendet wird
Zusätzlich kann als Alternative der PTT-UA 2 einen anderen Floor Control Mechanismus (z.B.: Kollisionsbehandlung von Gespräch-Bursts) einsetzen.

### • Einladung zu Gruppen

In dem PTT-UA 2 angelegte Gruppen können über alle Kanäle, die am PTT-Server 3 verfügbar sind, bekannt gegeben werden.
Zusätzlich können diese Gruppen über einen GSM-Kurzmitteilungsservices oder anderen Mitteln bekannt gegeben werden. Die PTT-Benutzer können eine SMS zum PTT-UA 2 senden, um die PIE-Benutzer einzuladen.

### • Web Konfiguration des PTT-UA 2

Alle Benutzer-Konfigurationen können über ein Web-Portal administriert werden, dass zum PTT-UA 2 verbunden oder darin implementiert ist.

### • Behandlung der Vergebührung

Da der PTT-UA alle Benutzer-Interaktionen abhandelt, kann er als zentraler Punkt zum generieren von Vergebührungs-Tickets/Events für alle mögliche Benutzer Interaktion Events verwendet werden. Eine andere Möglichkeit ist die Vergebührung im PPT-Server 3 zu lassen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

**Bezugszeichen/Legende**

| | |
|---|---|
| 1. PTT | Push-To-Talk Endgerät 1a, 1b, 1c |
| 2. PTT-UA | Push-To-Talk PSTN/ISDN Back-to-Back User Agent |
| 3. PTT-Server | Push-To-Talk-Server |
| 4. PTT-FC | Push-To-Talk Floor Control (Kollisionskontrolle) |
| 5. ISDN | Integrated Services Digital Network (digitales Fernmeldenetzwerk) |
| 6. PSTN | Public Switched Telephone Network (analoges Fernmeldenetzwerk) |
| 7. PIE | PSTN/ISDN - Einrichtung |
| 8. PoC | Push-to-Talk over cellular |
| 9. PoC-Terminal | Terminal für Push-To-Talk over cellular 9a, 9b, 9c |
| 10. SMS | Short Message Service (Messaging-Dienst) |
| 11. SMSC | Short Message Service Center |
| 11. DTMF | Dual Tone Multi Frequency (Zweiton-Verfahren) |
| 12. IVR | Interactive Voice Response |
| | (Sprachgesteuerte Menüführung) |
| 13. Calling Party | Gesprächspartner |
| 14. Calling Party Adress | Adresse der Quell-Endeinrichtung |
| 15. Burst | Datenpaket im Austausch zwischen Telefon und Funkbasisstation (BTS) |
| 16. Escape Code | Abbruch-Code |
| 17. PLMN | Public Land Mobile Network (öffentliches Mobilfunknetz) |
| 18. Semi-Duplex-Kommunikation | |
| | Kommunikation mit automatischer Richtungsumschaltung |
| | der Übertragungsrichtung im Übertragungskanal |

## Patentansprüche

1. Verfahren zur Durchführung einer PTT-, Push-To-Talk-Kommunikation in einem digitalen und/oder analogen Telefonnetz (6, 5), wobei eine Vorrichtung als Schnittstelle für eine Semi-Duplex-Kommunikation (18) zwischen einem Push-to-Talk Server (3) und dem analogen bzw. digitalen Telefonnetz (6, 5) ausgebildet ist, und das analoge bzw. digitale Netz (6, 5) als Schnittstelle zum Bedienungsmittel dient, wobei die Schnittstelle als Rechner einen Kommunikationsknoten- bzw. ein Gruppensystem verwendet und eine Kommunikation in einem Übertragungskanal mit automatischer Richtungsumschaltung (18) in einem analogen oder digitalen Telefonnetz (6, 5) in Richtung eines verfügbaren Push-To-Talk-Servers (3) ausführt, wobei das analoge oder digitale Telefonnetz (6, 5) als Audio- und Kontrollschnittstelle in Richtung des Bedienungsmittels ausgebildet ist, **dadurch gekennzeichnet,**
**dass** ein Kommunikations-Knoten / Cluster-System in Form eines Gateway / User Agent (2) für eine Semi-Duplex-Kommunikation (18) für Anrufe aus dem und in das PSTN/ISDN (6, 5) in Richtung eines verfügbaren Push-To-Talk Servers (3) betrieben wird, und eine PSTN/ISDN Einrichtung, PIE, (7) als eine Audio- und Kontroll-Schnittstelle zum User Agent (2) ausgebildet ist, wobei eine Adressierung von Benutzern durch den Push-To-Talk User Agent (2) unterstützt und vereinfacht ist, wobei der User Agent (2) die Gruppen mittels Spracherkennung, über DTMF (11), durch Einsatz einer SMS-ähnlichen Eingabe oder mit einem Textvervollständigungsalgorithmus, wie zum Beispiel "T9" adressiert, wobei der PTT-User Agent (2) alle anmelde- und benutzerrelevanten Daten speichert, die zur Kommunikation mit dem PTT-Server (3) im Namen der PSTN/ISDN-Einrichtung, PIE (7) notwendig sind,
wobei eine Anmeldung für die Authentifizierung der Benutzer zwecks Erhalt der Zugangsermächtigung zu dem PTT-Service und zu s einen Kontodaten erfolgt wobei bei einer Anmeldung zu Gruppen der PTT-User Agent (2) den Audio Pfad der PIE (7) mit der Gruppe von Benutzern verbindet, welche der PIE (7) zugeteilt sind,
wobei Der PTT-UA (2) unterschiedliche Regeln für Teilnehmer der PTT-Konversation handhabt, insbesondere eine Floor Control-Funktion, welche die Kollision von einem Gesprächs-Burst in Richtung des PTT-Servers (3) kontrolliert, dass der PTT-UA (2) eine Speicherung von Gesprächs-Bursts durchführt und die PIE (7) über gespeicherte Gesprächs-Bursts benachrichtigt,
Wobei der PTT-User Agent (2) ein Menü zum Setzen aller Parameter unterstützt, die am PTT-Server (3) von den Endgeräten (1, 1 a, 1 b) unterstützt werden, wobei innerhalb einer PTT-Kommunikation eine Semi-Duplex Kommunikation (18) in Form einer "Eins zu Eins" Kommunikation über DTMF bereitgestellt wird, wobei die PIE (7) einen Push-To-Talk Gruppenanruf, wie zum Beispiel Anruf der gesamten Gruppe aufbaut und empfängt,
wobei zusätzlich zur PTT Funktionalität der PTT-UA (2) eine Konferenzschaltung bereitstellt, welcher der PIE (7), oder anderen Benutzern von PSTN/ISDN/PLMN-Festnetzen (6, 5, 17) und Benutzern einer PTT-Server Gruppen eine Konferenzschaltung ermöglicht.

2. Verfahren nach Anspruch 1, **dadurch gekennzeichnet, dass** die PSTN/ISDN (6, 5) Kontrollschnittstelle folgendes unterstützt:
eine DTMF Signalisierung und/oder eine Interaktive Sprachausgabe und/oder eine Spracherkennung.

3. Verfahren nach einem der vorhergehenden Ansprüche 1 oder 2, **dadurch gekennzeichnet, dass** jeder User Agent (2) die relevanten Daten hält, welche zur Kommunikation notwendig sind, um mit dem PTT-Server (3) im Namen des PSTN/ISDN Benutzers zu kommunizieren.

4. Verfahren nach einem der vorhergehenden Ansprüche 1 bis 3, **dadurch gekennzeichnet, dass** jeder Benutzer authentifiziert und berechtigt wird durch:
eine Calling / Called Party Adresse (14) und/oder einen Benutzernamen / Passwort mittels DTMF (11) / IVR (12) und/oder mittels Spracherkennung.

5. Verfahren nach einem der vorhergehenden Ansprüche 1 bis 4, **dadurch gekennzeichnet, dass** die Authentifikation zum Push-To-Talk Server (3) weitergeleitet und übersetzt wird.

6. Verfahren nach einem der vorhergehenden Ansprüche 1 bis 5, **dadurch gekennzeichnet, dass** die PT-T Kommunikation in Gruppen oder als "Eins zu Eins"-Verbindung organisiert ist.

7. Verfahren nach einem der vorhergehenden Ansprüche 1 bis 6, **daducch** gekennzeichnet, dass für die Gruppenkommunikation der PTT-UA (2) den Audio Pfad der PIE mit der Gruppe von Benutzern verbindet, welche der PIE zugeteilt sind.

8. Verfahren nach einem der vorhergehenden Ansprüche 1 bis 7, **dadurch gekennzeichnet, dass** der User Agent (2) unterschiedliche Regeln für die Teilnahme der PTT-Konversation ausführt und eine Floor Control (4) ausbildet, welche Kollisionen von einem Gesprächs-Burst (15) in Richtung Push-To-Talk-Server (3) kontrolliert und diese vermeidet, wenn die Kommunikation als Uni Direktionale Kommunikation ausgeführt ist.

9. Verfahren nach einem der vorhergehenden Ansprüche 1 bis 8, **dadurch gekennzeichnet, dass** der Wunsch eines PSTN/ISDN Benutzers erkannt wird einen Gesprächs-Burst wie nachfolgend zu senden und auszubilden:
- DTMF (11) und/oder
- interaktive Sprachausgabe und/oder
- Spracherkennung und/oder
- Sprachtätigkeitsabfragen und/oder
- Geräuscherkennung / Geräuschpegelerkennung.

10. Verfahren nach einem der vorhergehenden Ansprüche 1 bis 9, **dadurch gekennzeichnet, dass** ein PSTN/ISDN Benutzer keine Verbindung mit dem User Agent (2) aufweist, wobei zu diesem Benutzer eine Verbindung besteht, speichert der PTT-UA (2) den Gesprächs-Burst (15), ruft den PSTN/ISDN Benutzer an, liefert den Gesprächs-Burst (15), wobei der User Agent (2) den Burst (15) löscht, die PIE ruft und die PIE zu der Gruppe verbindet.

11. Verfahren nach einem der vorhergehenden Ansprüche 1 bis 10, **dadurch gekennzeichnet, dass** der Benutzer entscheidet, wann ein Anruf vom PSTN/ISDN Benutzer beendet wird, ob und wann für den Benutzer eine Benachrichtigung ausgebildet wird und ob der Benutzer in den Gruppen des Push-To-Talk-Servers (3) verbleibt oder sich von der Gruppe bzw. des Services des Push-To-Talk-Servers (3) abmeldet.

12. Verfahren nach einem der vorhergehenden Ansprüche 1 bis 11, **dadurch gekennzeichnet, dass** der Push-To-Talk User Agent (2) zur Unterstützung ein Menü zum Setzen aller Parameter aufweist, welche vom Push-To-Talk Endgerät (1) auf dem Push-To-Talk-Server (3) veränderbar sind..

13. Verfahren nach einem der vorhergehenden Ansprüche 1 bis 12, **dadurch gekennzeichnet, dass** das Verfahren folgende veränderbare Parameter aufweist:
erstellen/bearbeiten/löschen/annehmen von Gruppen-Definition und deren Handhabung
Setzen der Benutzer Präferenzen
Handhabung von Benachrichtigungen
Konfiguration des Services

14. Verfahren nach einem der vorhergehenden Ansprüche 1 bis 13, **dadurch gekennzeichnet, dass** die Bedienung mittels einem interaktiven Spracheingabe bzw. -ausgabesystem oder direkte Sprachkommandos ausgebildet ist, welche mittels DTMF (11) oder Spracherkennungskommandos gesteuert werden.

15. Verfahren nach einem der vorhergehenden Ansprüche 1 bis 14, **dadurch gekennzeichnet, dass** die Push-To-Talk Kommunikation als Semi-Duplex (18) "Eins zu Eins"-Kommunikation über eine Spracherkennung oder DTMF (11) mittels einem Escape-Codes (16) oder mittels direkter Adressierung des Partners durch Kurzwahl oder Name aufgebaut ist.

16. Verfahren nach einem der vorhergehenden Ansprüche 1 bis 15, **dadurch gekennzeichnet, dass** der PSTN/ISDN Benutzer einen Push-To-Talk Gruppenanruf startet und empfängt.

17. Verfahren nach einem der vorhergehenden Ansprüche 1 bis 16, **dadurch gekennzeichnet, dass** die Benutzeradressierung beim Erstellen der Gruppen mittels dem Push-To-Talk User Agent (2) unterstützt und vereinfacht ist, wobei der User-Agent (2) die Adresse der Gruppenidentitäten oder der Benutzer mittels Spracherkennung, mittels DTMF (11) durch SMS-ähnliche Eingabe oder mittels einem Textvervollständigungsalgorithmus nach dem Anderen/Kurzwahl/Namen adressiert.

18. Verfahren nach einem der vorhergehenden Ansprüche 1 bis 17, **dadurch gekennzeichnet, dass** Zusatzdienste, wie zum Beispiel Rufumleitung, Konferenzschaltung, Anklopfen, Weiterverbinden und Anruf halten auf der PSTN/ISDN (6, 5) Seite anruferseitig, terminierend oder in Push-To-Talk Gesprächen/Verbindungen verwendet werden.

19. Verfahren nach einem der vorhergehenden Ansprüche 1 bis 18, **dadurch gekennzeichnet, dass** zusätzlich zu den Push-To-Talk Funktionalitäten der Push-To-Talk User-Agent (2) eine Konferenzschaltung ausbildet, welche Push-To-Talk Benutzer im PSTN/ISDN-Netz (6, 5), andere Benutzer von PSTN/ISDN (6, 5) / PLMN-Festnetzen (17) und/oder Benutzer einer PTT-Server Gruppe aufweist.

20. Verfahren nach einem der vorhergehenden Ansprüche 1 bis 19, **dadurch gekennzeichnet, dass** eine Konferenz als ein einzelner Benutzer zum PTT-Server (3) ausgebildet ist, wenn eine bidirektionale Kommunikation in der Konferenz verwendet wird, oder der Push-To-Talk User Agent (2) andere Floor-Kontroll-Mechanismen einsetzt, wie zum Beispiel das Kollisionshandling von Gespräch-Bursts (15).

21. Verfahren nach einem der vorhergehenden Ansprüche 1 bis 20, **dadurch gekennzeichnet, dass** die mit dem PTT-User Equipment erstellten Gruppen über alle dem PTT-Server (3) verfügbaren Kanäle bekannt gegeben werden.

22. Verfahren nach einem der vorhergehenden Ansprüche 1 bis 21, **dadurch gekennzeichnet, dass** diese Gruppen zusätzlich über einen GSM-Kurzmitteilungsservices (SMS) (10) oder andere Mittel bekannt gegeben werden und zusätzlich die PTT-Benutzer eine SMS zum PTT-UA (2) senden und den PSTN/ISDN-Benutzer einladen.

23. Verfahren nach einem der vorhergehenden Ansprüche 1 bis 22, **dadurch gekennzeichnet, dass** alle Benutzer-Konfigurationen über ein Web-Portal administriert werden, welches mit dem Push-To-Talk User Agent (2) verbunden oder darin implementiert ist.

24. Verfahren nach einem der vorhergehenden Ansprüche 1 bis 23, **dadurch gekennzeichnet, dass** der PTT-UA (2) alle Benutzeraktionen verfolgt, und als zentraler Punkt zum generieren von Vergebührungs Tickets/Events für alle mögliche Benutzer-Interaktions-Events verwendet wird.

25. Verfahren nach einem der vorhergehenden Ansprüche 1 bis 24, **dadurch gekennzeichnet, dass** die Vergebührung im PTT-Server (3) ausgebildet ist.

26. Verfahren nach einem der vorhergehenden Ansprüche 1 bis 25, **dadurch gekennzeichnet, dass** zusätzliche Funktionalitäten zur Bereitstellung von Legal Interception und/oder weiterer Sicherheitsfunktionen integriert sind.

## Claims

1. Method for carrying out PTT push-to-talk communication in a digital and/or analogue telephone network (6, 5), wherein a device is designed as an interface for a semi-duplex communication (18) between a push-to-talk server (3) and the analogue or digital telephone network (6, 5), and the analogue or digital network (6, 5) serves as an interface with the control means, wherein the interface uses a communications node or group system as a computer and carries out communication in a transmission channel with automatic direction switching (18) in an analogue or digital telephone network (6, 5) in the direction of an available push-to-talk server (3), wherein the analogue or digital telephone network (6, 5) is designed as an audio and monitoring interface in the direction of the control means, **characterised in that** a communications node / cluster system is operated in the form of a gateway / user agent (2) for a semi-duplex communication (18) for calls from and to the PSTN/ISDN (6, 5) in the direction of an available push-to-talk server (3), and a PSTN/ISDN device PID (7) is designed as an audio and monitoring interface with the user agent (2), wherein addressing of users is supported and simplified by the push-to-talk user agent (2), wherein the user agent (2) addresses the groups by speech recognition, via DTMF (11), by using an SMS-like input or with a text prediction algorithm such as for example "T9", wherein the PTT user agent (2) stores all the data relevant to logon and users which are necessary for communication with the PTT server (3) on behalf of the PSTN/ISDN device PID (7), wherein logon is effected for the authentication of users for the purpose of obtaining authorisation for access to the PTT service and to its account data, wherein, in case of logging on to groups, the PTT user agent (2) connects the audio path of the PID (7) to the group of users which are allocated to the PID (7), wherein the PTT UA (2) handles different rules for subscribers of the PTT conversation, in particular a floor control function which monitors the collision of a burst of conversation in the direction of the PTT server (3), **in that** the PTT UA (2) carries out storage of bursts of conversation and notifies the PID (7) of stored bursts of conversation, wherein the PTT user agent (2) supports a menu for setting all parameters which are supported at the PTT server (3) by the terminals (1, 1a, 1b), wherein, within a PTT communication, a semi-duplex communication (18) is provided in the form of a "one-to-one" communication via DTMF, wherein the PID (7) makes and receives a push-to-talk group call, for example a call to the whole group, wherein in addition to the PTT function the PTT UA (2) provides a conference link which enables a conference link for the PID (7) or other users of PSTN/ISDN/PLMN fixed networks (6, 5, 17) and users of a PTT server group.

2. Method according to claim 1, **characterised in that** the PSTN/ISDN (6, 5) monitoring interface supports the following:
DTMF signalling and/or interactive speech output and/or speech recognition.

3. Method according to one of the preceding claims 1 or 2, **characterised in that** each user agent (2) holds the relevant data which are necessary for communication in order to communicate with the PTT server (3) on behalf of the PSTN/ISDN user.

4. Method according to one of the preceding claims 1 to 3, **characterised in that** each user is authenticated and authorised by: a calling / called party address (14) and/or a user name / password by means of DTMF (11) / IVR (12) and/or by means of speech recognition.

5. Method according to one of the preceding claims 1 to 4, **characterised in that** the authentication is forwarded to the push-to-talk server (3) and translated.

6. Method according to one of the preceding claims 1 to 5, **characterised in that** the PTT communication is organised in groups or as a "one-to-one" connection.

7. Method according to one of the preceding claims 1 to 6, **characterised in that** for group communication the PTT UA (2) connects the audio path of the PID to the group of users which are allocated to the PID.

8. Method according to one of the preceding claims 1 to 7, **characterised in that** the user agent (2) carries out different rules for taking part in the PTT conversation and forms a floor control means (4) which monitors collisions of a burst of conversation (15) in the direction of the push-to-talk server (3) and avoids these when communication is carried out as unidirectional communication.

9. Method according to one of the preceding claims 1 to 8, **characterised in that** the wish of a PSTN/ISDN user to send and form a burst of conversation as below is recognised:
- DTMF (11) and/or
- interactive speech output and/or
- speech recognition and/or
- speech activity requests and/or
- noise detection / noise level detection.

10. Method according to one of the preceding claims 1 to 9, **characterised in that** a PSTN/ISDN user has no connection to the user agent (2), wherein if there is a connection to this user, the PTT UA (2) stores the burst of conversation (15), calls the PSTN/ISDN user, delivers the burst of conversation (15), wherein the user agent (2) cancels the burst (15), calls the PID and connects the PID to the group.

11. Method according to one of the preceding claims 1 to 10, **characterised in that** the user decides when a call is ended by the PSTN/ISDN user, whether and when a notification is formed for the user and whether the user remains in the groups of the push-to-talk server (3) or logs off from the group or service of the push-to-talk server (3).

12. Method according to one of the preceding claims 1 to 11, **characterised in that** the push-to-talk user agent (2) has, for support, a menu for setting all parameters which can be altered by the push-to-talk terminal (1) on the push-to-talk server (3).

13. Method according to one of the preceding claims 1 to 12, **characterised in that** the method has the following variable parameters:
setting up/processing, cancelling, accepting group definition and its handling setting the user preferences
handling of notifications
configuration of the service.

14. Method according to one of the preceding claims 1 to 13, **characterised in that** operation is designed by means of an interactive speech input or output system or direct speech commands which are controlled by DTMF (11) or speech recognition commands.

15. Method according to one of the preceding claims 1 to 14, **characterised in that** the push-to-talk communication is made as a semi-duplex (18) "one-to-one" communication via speech recognition or DTMF (11) by means of an escape code (16) or by direct addressing of the partner by speed dial or name.

16. Method according to one of the preceding claims 1 to 15, **characterised in that** the PSTN/ISDN user starts and receives a push-to-talk group call.

17. Method according to one of the preceding claims 1 to 16, **characterised in that** user addressing when setting up the groups is supported and simplified by means of the push-to-talk user agent (2), wherein the user agent (2) addresses the address of the group identities or users by speech recognition, by DTMF (11) by SMS-like input or by means of one text prediction algorithm after the other/speed dial/name.

18. Method according to one of the preceding claims 1 to 17, **characterised in that** additional services, for example call diversion, conference link, call waiting, transfer and call holding are used on the PSTN/ISDN (6, 5) side by the caller, terminating or in push-to-talk conversations/connections.

19. Method according to one of the preceding claims 1 to 18, **characterised in that**, in addition to the push-to-talk functions, the push-to-talk user agent (2) forms a conference link which has push-to-talk users in the PSTN/ISDN network (6, 5), other users of PSTN/ISDN (6, 5) / PLMN fixed networks (17) and/or users of a PTT server group.

20. Method according to one of the preceding claims 1 to 19, **characterised in that** a conference is set up as a single user to the PTT server (3) when bidirectional communication is used in the conference, or the push-to-talk user agent (2) uses other floor control mechanisms, for example collision handling of bursts of conversation (15).

21. Method according to one of the preceding claims 1 to 20, **characterised in that** the groups set up with the PTT user equipment are announced via all channels available to the PTT server (3).

22. Method according to one of the preceding claims 1 to 21, **characterised in that** these groups in addition are announced via a GSM short message service (SMS) (10) or other means, and in addition the PTT users send an SMS to the PTT UA (2) and invite the PSTN/ISDN user.

23. Method according to one of the preceding claims 1 to 22, **characterised in that** all user configurations are administered via a web portal which is connected to the push-to-talk user agent (2) or implemented therein.

24. Method according to one of the preceding claims 1 to 23, **characterised in that** the PTT UA (2) tracks all user actions, and is used as a central point for generating charging tickets/events for all possible user interaction events.

25. Method according to one of the preceding claims 1 to 24, **characterised in that** charging is set up in the PTT server (3).

26. Method according to one of the preceding claims 1 to 25, **characterised in that** additional functions for providing legal interception and/or further security functions are integrated.

## Revendications

1. Procédé pour réaliser une communication par messagerie vocale instantanée, PTT, dans un réseau téléphonique numérique et/ou analogique (6, 5), étant précisé qu'un dispositif est conçu comme une interface pour une communication semi-duplex (18) entre un serveur de messagerie vocale instantanée (3) et le réseau téléphonique analogique ou numérique (6, 5), et que le réseau analogique ou numérique (6, 5) sert d'interface avec le moyen de commande, étant précisé que l'interface utilise comme ordinateur un système de noeud de communication ou un système groupé et réalise une communication dans un canal de transmission avec une inversion de direction automatique (18) dans un réseau téléphonique analogique ou numérique (6, 5) dans le sens d'un serveur PTT (3) disponible, étant précisé que le réseau téléphonique analogique ou numérique (6, 5) est conçu comme une interface audio ou de contrôle dans le sens du moyen de commande, **caractérisé en ce qu'**un noeud de communication/système de cluster en forme de passerelle/agent utilisateur (2) est utilisé pour une communication semi-duplex (18) pour les appels en provenance et à destination du PSTN/ISDN (6, 5) dans le sens d'un serveur PTT (3) disponible, et qu'un dispositif PSTN/ISDN, PIE, (7) est conçu comme une interface audio et de contrôle avec l'agent utilisateur (2), étant précisé qu'un adressage par des utilisateurs est supporté et simplifié grâce à l'agent utilisateur PTT (2), étant précisé que l'agent utilisateur (2) adresse les groupes par reconnaissance vocale, par l'intermédiaire de la DTMF (11), grâce à la mise en oeuvre d'une entrée du type SMS ou avec un algorithme de complément de texte, comme par exemple "T9", étant précisé que l'agent utilisateur PTT (2) stocke toutes les données importantes pour la demande et l'utilisateur qui sont nécessaires pour la communication avec le serveur PTT (3) au nom du dispositif PSTN/ISDN, PIE (7),
étant précisé qu'une demande pour l'authentification des utilisateurs a lieu en vue d'obtenir l'autorisation d'accès au service PTT et à ses données de compte,
étant précisé que lors d'une demande pour des groupes, l'agent utilisateur PTT (2) connecte le chemin audio du PIE (7) au groupe d'utilisateurs qui sont affectés au PIE (7),
étant précisé que le PTT-UA (2) traite différentes règles pour les abonnés de la conversation PTT, en particulier une fonction de commande de prise de parole qui contrôle la collision d'un afflux de conversations dans le sens du serveur PTT (3),
que le PTT-UA (2) effectue une mise en mémoire des afflux de conversations et informe le PIE (7) des afflux de conversations mis en mémoire,
étant précisé que l'agent utilisateur PTT (2) supporte un menu pour fixer tous les paramètres qui sont supportés au niveau du serveur PTT (3) par les terminaux (1, 1a, 1b),
étant précisé qu'à l'intérieur d'une communication PTT, une communication semi-duplex (18) est fournie sous la forme d'une communication "un à un" par l'intermédiaire de la DTMF,
étant précisé que le PIE (7) établit et reçoit un appel groupé par messagerie vocale instantanée, comme par exemple un appel de tout le groupe,
étant précisé qu'en plus de la fonctionnalité PTT, le PTT-UA (2) fournit une conférence téléphonique qui permet au PIE (7) ou à d'autres utilisateurs de réseaux fixes PSTN/ISND/PLMN (6, 5, 17) et à des utilisateurs d'un groupe de serveurs PTT de tenir une conférence téléphonique.

2. Procédé selon la revendication 1, **caractérisé en ce que** l'interface de contrôle PSTN/ISDN (6, 5) supporte ce qui suit :
une signalisation DTMF et/ou une sortie vocale interactive et/ou une reconnaissance vocale.

3. Procédé selon l'une des revendications 1 ou 2 précédentes, **caractérisé en ce que** chaque agent utilisateur (2) conserve les données importantes qui sont nécessaires à la communication, pour communiquer avec le serveur PTT (3) au nom de l'utilisateur PSTN/ISDN.

4. Procédé selon l'une des revendications 1 à 3 précédentes, **caractérisé en ce que** chaque utilisateur est authentifié et autorisé grâce à : une adresse d'appelant/appelé (14) et/ou un nom d'utilisateur/mot de passe à l'aide de la DTMF (11)/IVR (12) et/ou par reconnaissance vocale.

5. Procédé selon l'une des revendications 1 à 4 précédentes, **caractérisé en ce que** l'authentification est acheminée et transférée vers le serveur de messagerie vocale instantanée (3).

6. Procédé selon l'une des revendications 1 à 5 précédentes, **caractérisé en ce que** la communication PT-T est organisée en groupes ou sous forme de liaison "un à un".

7. Procédé selon l'une des revendications 1 à 6 précédentes, **caractérisé en ce que** pour la communication en groupe, le PTT-UA (2) relie le chemin audio du PIE au groupe d'utilisateurs qui sont affectés au PIE.

8. Procédé selon l'une des revendications 1 à 7 précédentes, **caractérisé en ce que** l'agent utilisateur (2) exécute différentes règles pour la participation à la conversation PTT et forme une commande de prise de parole (4) qui contrôle les collisions d'un afflux de conversations (15) en direction du serveur de messagerie vocale instantanée (3) et les évite quand la communication est effectuée sous forme de communication unidirectionnelle.

9. Procédé selon l'une des revendications 1 à 8 précédentes, **caractérisé en ce que** le souhait d'un utilisateur PSTN/ISDN d'envoyer et de former un afflux de conversations de la manière suivante est détecté :
- DTMF (11) et/ou
- sortie vocale interactive et/ou
- reconnaissance vocale et/ou
- demande d'activité vocale et/ou
- détection de bruit/détection de niveau de bruit.

10. Procédé selon l'une des revendications 1 à 9 précédentes, **caractérisé en ce qu'**un utilisateur PSTN/ISDN ne présente pas de liaison avec l'agent utilisateur (2), étant précisé que s'il y a une liaison avec cet utilisateur, le PTT-UA (2) stocke l'afflux de conversations (15), appelle l'utilisateur PSTN/ISDN, fournit l'afflux de conversations (15), étant précisé que l'agent utilisateur (2) supprime l'afflux (15), appelle le PIE et relie le PIE au groupe.

11. Procédé selon l'une des revendications 1 à 10 précédentes, **caractérisé en ce que** l'utilisateur décide quand un appel de l'utilisateur PSTN/ISDN se termine, si et quand une notification est formée pour l'utilisateur, et si l'utilisateur reste dans les groupes du serveur de messagerie vocale instantanée (3) ou se déconnecte du groupe ou du service du serveur de messagerie instantanée (3).

12. Procédé selon l'une des revendications 1 à 11 précédentes, **caractérisé en ce que** l'agent utilisateur de messagerie vocale instantanée (2) comporte, pour le support, un menu pour fixer tous les paramètres qui sont aptes à être modifiés par le terminal de messagerie vocale instantanée (1) sur le serveur de messagerie vocale instantanée (3).

13. Procédé selon l'une des revendications 1 à 12 précédentes, **caractérisé en ce que** le procédé comporte les paramètres aptes à être modifiés suivants :
établissement/traitement/suppression/acceptation d'une définition de groupe et gestion de celle-ci
fixation des préférences de l'utilisateur gestion de notifications
configuration du service.

14. Procédé selon l'une des revendications 1 à 13 précédentes, **caractérisé en ce que** la commande est conçue à l'aide d'une entrée vocale interactive ou d'un système de sortie interactif, ou d'une commande vocale directe qui sont commandés par DTMF (11) ou commandes par reconnaissance vocale.

15. Procédé selon l'une des revendications 1 à 14 précédentes, **caractérisé en ce que** la communication par messagerie vocale instantanée est établie sous la forme d'une communication "un à un" semi-duplex (18) par reconnaissance vocale ou DTMF (11) à l'aide d'un code d'échappement (16) ou à l'aide d'un adressage direct du partenaire par numérotation abrégée ou par nom.

16. Procédé selon l'une des revendications 1 à 15 précédentes, **caractérisé en ce que** l'utilisateur PSTN/ISDN démarre et reçoit un appel groupé par messagerie vocale instantanée.

17. Procédé selon l'une des revendications 1 à 16 précédentes, **caractérisé en ce que** l'adressage d'utilisateur est supporté et simplifié lors de l'établissement des groupes à l'aide de l'agent utilisateur de messagerie vocale instantanée (2), étant précisé que l'agent utilisateur (2) adresse l'adresse des identités de groupe ou des utilisateurs par reconnaissance vocale, par DTMF (11) grâce à une entrée du type SMS, ou par un algorithme de complément de texte l'un après l'autre/ numérotation abrégée/nom.

18. Procédé selon l'une des revendications 1 à 17 précédentes, **caractérisé en ce que** des services supplémentaires, comme par exemple transfert d'appel, conférence téléphonique, indication d'appel en instance, retransmission et mise en attente d'un appel, sont utilisés côté appelant côté PSTN/ISDN (6, 5), pour terminer ou dans des communication/liaisons par messagerie vocale instantanée.

19. Procédé selon l'une des revendications 1 à 18 précédentes, **caractérisé en ce que**, en plus des fonctionnalités de messagerie vocale instantanée, l'agent de messagerie vocale instantanée (2) forme une téléconférence qui comprend des utilisateurs de messagerie vocale instantanée dans le réseau PSTN/ISDN (6, 5), d'autres utilisateurs de PSTN/ISDN (6, 5)/réseaux PLMN (17) et/ou des utilisateurs d'un groupe de serveurs PTT.

20. Procédé selon l'une des revendications 1 à 19 précédentes, **caractérisé en ce qu'**une conférence est conçue comme un utilisateur individuel pour le serveur PTT (3) si une communication bidirectionnelle est utilisée dans la conférence ou si l'agent utilisateur de messagerie vocale instantanée (2) utilise d'autres mécanismes de commande de prise de parole, comme par exemple la gestion de collision d'afflux de communications (15).

21. Procédé selon l'une des revendications 1 à 20 précédentes, **caractérisé en ce que** les groupes établis avec l'équipement d'utilisateur PTT sont communiqués sur tous les canaux disponibles pour le serveur PTT (3).

22. Procédé selon l'une des revendications 1 à 21 précédentes, **caractérisé en ce que** ces groupes sont communiqués en supplément par l'intermédiaire d'un service de messages courts GSM (SMS) (10) ou d'autres moyens, et, en supplément, les utilisateurs PTT envoient un SMS au PTT-UA (2) et invitent le PSTN/ISDN.

23. Procédé selon l'une des revendications 1 à 22 précédentes, **caractérisé en ce que** toutes les configurations d'utilisateur sont administrées par l'intermédiaire d'un portail web qui est relié à l'agent utilisateur de messagerie vocale instantanée (2) ou qui est installé dans celui-ci.

24. Procédé selon l'une des revendications 1 à 23 précédentes, **caractérisé en ce que** le PTT-UA (2) suit toutes les actions d'utilisateur et est utilisé comme point central pour générer des tickets de facturation/événements pour tous les événements d'interaction utilisateur possibles.

25. Procédé selon l'une des revendications 1 à 24 précédentes, **caractérisé en ce que** la facturation est formée dans le serveur PTT (3).

26. Procédé selon l'une des revendications 1 à 25 précédentes, **caractérisé en ce que** des fonctionnalités supplémentaires pour une intervention légale et/ou d'autres fonctions de sécurité sont intégrées.
